Europäisches Patentamt

European Patent Office

Office européen des brevets

(19)

(11) Numéro de publication: **0 142 434**
**A1**

(12) **DEMANDE DE BREVET EUROPEEN**

(21) Numéro de dépôt: **84402248.3**

(22) Date de dépôt: **08.11.84**

(51) Int. Cl.⁴: **B 21 F 27/20**
**B 23 K 11/32, B 23 K 11/36**

(30) Priorité: **08.11.83 FR 8317709**

(43) Date de publication de la demande:
**22.05.85 Bulletin 85/21**

(84) Etats contractants désignés:
**BE DE GB**

(71) Demandeur: **société dite: STANDARM**
**74, avenue du Général de Gaulle**
**F-72000 Le Mans(FR)**

(72) Inventeur:
**L'inventeur a renonce a sa designation**

(74) Mandataire: **Rodhain, Claude**
**Cabinet Claude RODHAIN 30, rue La Boétie**
**F-75008 Paris(FR)**

(54) **Appareil intégré autonome pour la fabrication d'armatures, en particulier pour béton armé.**

(57) L'invention concerne un appareil pour la fabrication d'armatures, en particulier pour l'assemblage des armatures métalliques pour béton armé.

Le problème technique posé consiste à fournir un tel appareil se présentant de manière intégrée et autonome.

Selon l'invention, l'appareil est constitué d'un bâti 9 fixe supportant un banc 8 d'assemblage et de soudage, et se caractérise en ce que le bâti 9 se prolonge dans sa partie supérieure par une superstructure III rétractable qui vient en position de travail surplomber le banc 8, et à laquelle est suspendue une machine 10 à assembler les armatures grâce à un moyen de fixation mobile (12, 14-18).

L'intérêt principal de l'invention est de fournir un appareil immédiatement prêt à l'emploi, et déplacable de manière sûre et aisée.

EP 0 142 434 A1

./...

FIG.2

"Appareil intégré autonome pour la fabrication d'armatures, en particulier pour béton armé".

L'invention concerne un appareil pour la fabrication d'armatures, en particulier pour les armatures métalliques pour béton armé, se présentant d'une manière intégrée et autonome.

On sait que les squelettes métalliques utilisés pour armer le béton sont réalisés le plus souvent à partir de filants rectilignes et parallèles, chaque armature étant constituée d'au moins deux filants et un élément de liaison, en particulier de plusieurs filants réunis entre eux par des étriers soudés en forme de cadres, fermés ou non. De façon habituelle les filants sont assemblés aux étriers, lesquels sont espacés régulièrement ou non sur toute la longueur des filants, soit par ligature métallique, soit par soudure.

L'assemblage et la liaison des filants aux cadres sont avantageusement réalisés sur des appareils assurant le positionnement rigide de l'armature, avant fixation définitive, sur un banc d'assemblage et de soudage monté sur un bâti. Le brevet français N°7136013 (N° de publication 2 155 083) du 6 Octobre 1971 (Société Anonyme Armatures Mancelles) présente ainsi un tel appareil pour la fabrication d'armatures dans lequel le banc d'assemblage et de soudage est notamment mobile en rotation autour d'un axe longitudinal, cette conception permettant à l'opérateur de présenter face à lui successivement les différentes zones de l'armature où doivent être réalisées les liaisons rigides et définitives. L'opérateur, dans le cas où, par exemple, ces liaisons rigides sont des soudures, se déplace longitudinalement toujours du même côté du banc d'assemblage avec sa machine électrique à souder (porte-électrode, arc...) pour effectuer les soudures. On connait également d'autres appareils de ce type dont le banc d'assemblage et de montage est fixe par rapport au bâti, les zones de liaison des filants aux cadres étant dégagées et aisément accessibles à l'opérateur.

Un problème rencontré à l'utilisation de tels gabarits d'assemblage est que la machine à lier entre eux les filants et les cadres, qui est le plus souvent une pince électrique à souder, est assez lourde à transporter et par là d'un maniement malaisé et imprécis, une telle machine étant en outre parfois relativement encombrante.

Dans certains ateliers on a pallié cette difficulté en plaçant l'appareil de fabrication d'armatures sous une poutre de l'atelier, de manière à y accrocher au moyen d'une tige ou d'un câble la machine à souder pour n'avoir plus qu'à la déplacer sans devoir la soutenir. Dans les installations les plus élaborées, la machine à souder est liée à un chariot mobile circulant dans un rail suspendu à la poutre, parallèlement au banc d'assemblage et de soudage.

Ces installations artisanales résolvent le problème de la maniabilité de la machine à lier entre eux les filants et les cadres, mais présentent évidemment l'inconvénient de fixer quasi-définitivement l'emplacement de l'appareil de fabrication d'armatures sous la poutre ou le rail en question. Le déménagement de l'appareil entraine en effet l'obligation d'effectuer de nouveaux travaux au-dessus de son nouvel emplacement.

La présente invention propose un appareil pour la fabrication d'armatures, en particulier pour béton armé, comportant un banc d'assemblage et de soudage monté sur un bâti, et une machine à lier entre eux les filants et les cadres qui constituent les armatures, cet appareil étant caractérisé en ce que le bâti fixe supportant le banc d'assemblage et de soudage se prolonge dans sa partie supérieure par une superstructure qui vient surplomber le banc, et à laquelle est suspendue la machine à lier entre eux les filants et les cadres grâce à un moyen de fixation mobile. Un tel appareil se présente donc de manière autonome, puisqu'il est équipé de tous les dispositifs le rendant directement utilisable sans qu'aucun accessoire supplémentaire ne doive être réalisé et par simple branchement au moyen de raccords rapides sur les réseaux d'air, d'eau et d'électricité. La superstructure joue en effet le rôle de guide et support de la machine à lier entre eux les filants et les cadres. Cette autonomie confère l'avantage essentiel d'autoriser aisément le déplacement et le déménagement de l'appareil selon l'invention.

L'appareil selon l'invention est en outre réalisé de manière intégrée, en ce sens qu'il est constitué d'éléments liés entre eux, de manière rigide ou articulée. Cette dernière caractéristique permet notamment le repliement de l'appareil, et particulièrement de la superstructure, en position d'encombrement réduit pour faciliter son transport.

Dans une version relativement élaborée de l'invention, la machine à lier entre eux les filants et les cadres, peut être déplacée sans effort en tout point d'un volume inscrit sous les branches supérieures horizontales de la superstructure.

D'autres caractéristiques et avantages de l'invention apparaîtront à la lecture de la description suivante, et des dessins annexés, dans lesquels :

- la fig.1 représente les grands éléments d'un poste de montage comprenant l'appareil intégré autonome pour la fabrication d'armatures selon l'invention ;

- la fig.2 représente une vue détaillée de l'appareil ;

- la fig.3 représente une vue de profil de l'appareil.

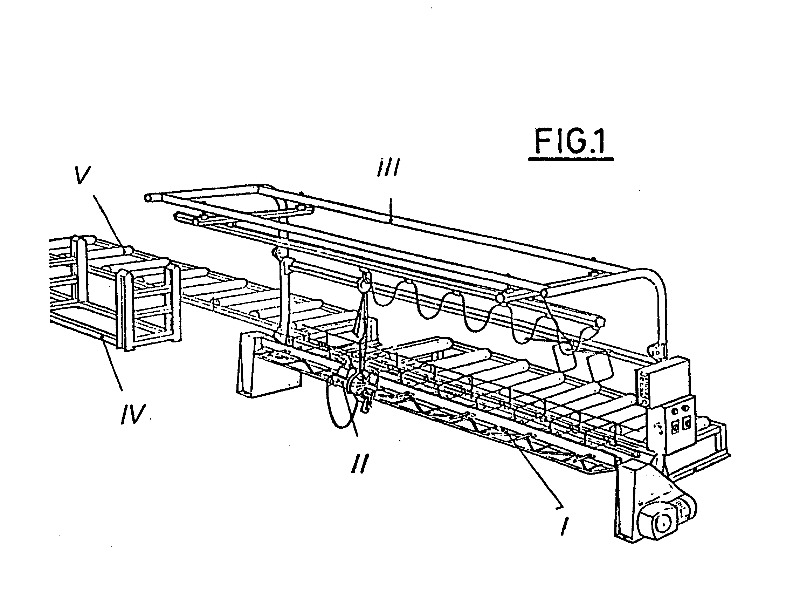

Selon la fig.1, le poste de montage pour la fabrication d'armatures, comprend essentiellement l'appareil intégré autonome selon l'invention constitué d'un gabarit d'assemblage I, d'un ensemble de soudage II, et d'une superstructure III.

Selon le mode de réalisation présenté, le gabarit d'assemblage I est constitué de façon connue d'un banc d'assemblage et de soudage 8, monté sur un bâti 9. Les armatures, constituées des filants 7 et des cadres 6 sont disposées sur le banc d'assemblage 8 de telle manière que tous ou partie des cadres 6 soient immobilisés entre les mâchoires 3,4 amovibles des deux règles 1,2 coulissant l'une par rapport à l'autre et pouvant être immobilisées en position de serrage au moyen d'une commande électropneumatique. Un boîtier 5 de commande à bouton pression du serrage électropneumatique est préférentiellement rapporté sur le montant 23 du bâti 9. Un second boitier est disposé de manière avantageuse sur le deuxième montant 23, de manière à permettre la commande d'ouverture et de fermeture des pinces pour deux positions de l'opérateur.

Selon un autre mode de réalisation, le banc 8 d'assemblage et de montage est mobile en rotation autour d'un axe longitudinal, de manière à pouvoir présenter face à l'opérateur placé toujours du même côté du banc chacune des zones de liaison des filants et des cadres.

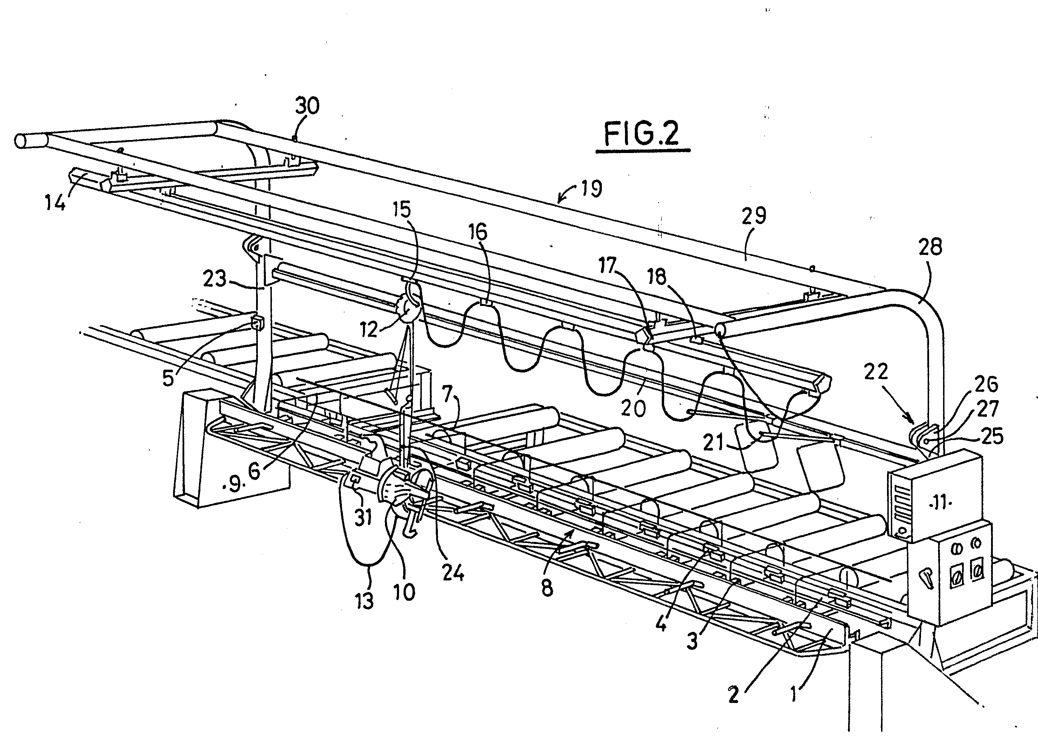

L'ensemble de soudage II, détaillé en fig.2, se compose d'une pince à souder 10 suspendue au moyen d'une tige 24 à un équilibreur 12 lié à un chariot 15 circulant dans un rail 14 de la superstructure III. La pince à souder 10 est commandée par un coffret de commande 11 assurant l'alimentation de la pince en énergie électrique, pneumatique et hydraulique ( particulièrement en eau de refroidissement) nécessaire à son fonctionnement, par l'intermédiaire du faisceau d'alimentation 13.

Selon un mode particulier de réalisation, le boîtier de la pince à souder 10 peut être muni d'un bouton 31 de commande de la rotation du banc d'assemblage et de soudage.

Le bâti 9 de l'appareil selon l'invention pour la fabrication d'armatures se prolonge dans sa partie supérieure par deux montants 23 sur lesquels est rapporté la superstructure III. Ces montants sont rigidifiés au moyen d'une traverse 20 soudée ou fixée par tout moyen sur lesdits montants 23 au niveau de l'articulation 22 de chacun des montants 23. Le châssis tubulaire 19 de la superstructure III est rapporté par tout moyen sur la partie mobile de chacune des deux articulations 22.

De manière préférentielle, les articulations 22 sont formées d'une part d'une cornière 25 soudée verticalement au montant 23 et percée d'un alésage suivant un axe horizontal, et d'autre part de deux cornières 26 soudées verticalement au châssis tubulaire 19 et percées chacune d'un alésage venant en coïncidence avec celui de la cornière 25 pour placer un axe de rotation 27. L'appareil comporte de manière avantageuse des systèmes de verrouillage de la superstructure III, pour l'immobiliser rigidement en position de travail d'une part, et en position repliée d'autre part.

Le support en tube 19 est préférentiellement constitué de deux tubes 28 pliés en équerre et liés à l'articulation 22 à l'une de leurs extrémités de manière à se situer chacun dans un plan vertical dans le prolongement des montants 23 du bâti 9, ces équerres 28 étant reliées entre elles par deux tubes 29 parallèles soudés ou fixés par tous moyens par leurs extrémités à chacune des branches des tubes en forme d'équerres 28 qui s'étendent
horizontalement lorsque la superstructure 3 est déployée.

Selon une caractéristique de l'invention, le rail
14 longitudinal dans lequel circule le chariot 15 auquel est
suspendue la pince à souder 10 est muni de deux jeux de galets
18 circulant dans deux glissières transversales 17 fixées symétriquement au niveau des extrémités des deux tubes 29 du support
en tube 19. Selon un mode de réalisation, ces glissières 17 sont
fixées aux tubes 29 au moyen de tiges filetées 30 engagées verticalement dans des orifices verticaux pratiqués dans les tubes 29, ces tiges étant immobilisées au moyen d'écrous de blocage en entrée et sortie des tubes 29.

Dans le rail 14 coulissent le chariot 15 mais aussi
des chariots légers 16 pour la suspension du faisceau d'alimentation 13 de la pince à souder 10. Selon une caractéristique
de l'invention, ce faisceau circule dans un des tubes 28 en
équerre du support en tube 19 avant d'être passé dans les chariots
16.

La superstructure III présentée en fig.2 permet donc
à l'opérateur d'immobiliser de manière stable et sans effort, la
pince à souder 10 en tout point du volume inscrit sous la surface d'évolution du rail 14 le long des glissières 17.

Selon une caractéristique de l'invention, des broches 21 sont rapportées sur la traverse 20 et constituent des
moyens de stockage des cadres 6.

Le poste de montage selon la fig.1 comprend également
un rack IV d'alimentation du banc d'assemblage et de soudage
8 en filants et un ensemble V d'évacuation à rouleaux des armatures terminées.

De manière avantageuse, le profil tubulaire de l'infrastructure est utilisé pour le passage des câbles et tuyaux
d'alimentation en air et eau ; cette disposition assure ainsi
la protection mécanique de ces conduits d'installation d'énergie.

Pour permettre une manutention aisée de l'appareil, la superstructure III est repliée, et son extrémité libre rabattue est rigidement fixée au bâti, au moyen d'au moins un élément de liaison rigide ; de cette manière, l'ensemble replié forme un bloc compact, dont tous les éléments sont arrimés les uns aux autres.

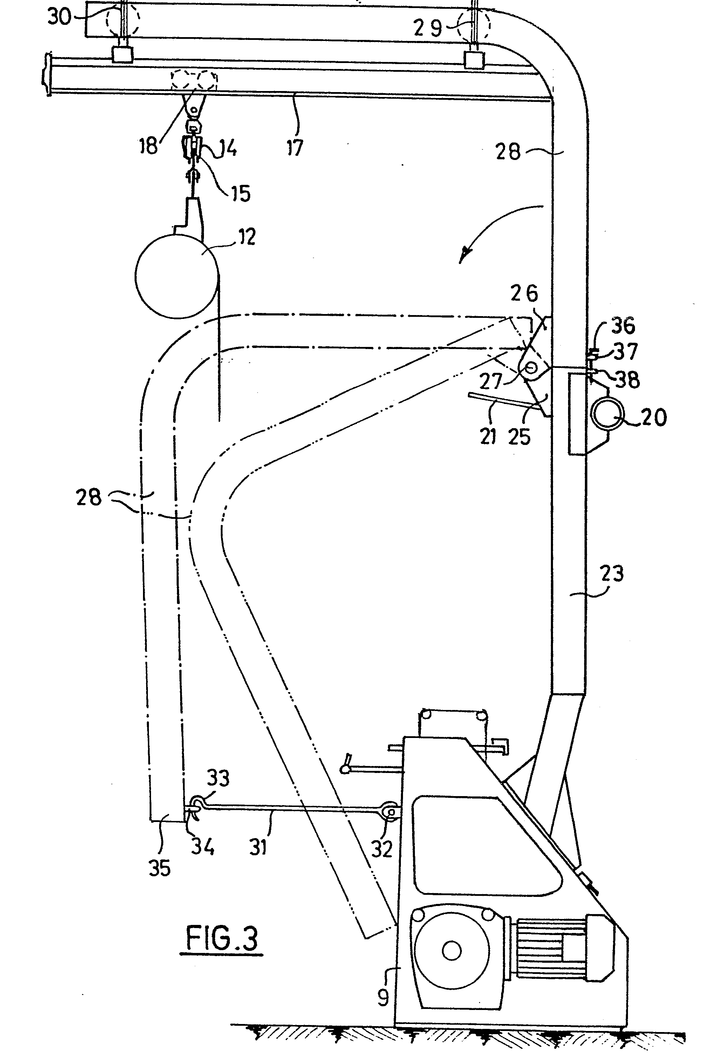

La fig.3 présente un mode de réalisation des verrouillages en position de travail et en position repliée. Lorsque la superstructure III est déployée, un taquet 36, glissé dans les anneaux 37 et 38, respectivement fixés sur le tube 28 et le montant 25, de chaque côté de l'appareil, vient verrouiller l'appareil en position de travail.

En position repliée, une tige crochetée 31, liée au bâti 9 par un anneau 32, vient verrouiller la superstructure rabattue au moyen de son crochet 33 passé dans l'anneau 34 fixé à l'extrémité 35 de la superstructure III. L'extrémité 35 peut également être amenée en contact avec le bâti 9, et y être ainsi verrouillée par tout moyen.

Il est clair que l'appareil selon l'invention pour la fabrication d'armatures peut être conçu selon d'autres modes de réalisation sans que l'on s'éloigne de l'esprit de l'invention.

REVENDICATIONS

1°) Appareil pour la fabrication d'armatures, en
particulier pour béton armé, constitué d'au moins deux filants
et un élément de liaison, en particulier de plusieurs filants
réunis entre eux par des étriers soudés en forme de cadres fermés ou non, cet appareil comportant de façon connue un banc (8)
d'assemblage et de soudage monté sur un bâti (9) et une machine
(10) à lier entre eux les filants et les cadres qui constituent
les armatures, caractérisé en ce que le bâti (9) fixe supporttant le banc (8) d'assemblage et de soudage se prolonge dans
sa partie supérieure par une superstructure (III) qui vient surplomber le banc (8), ladite machine (10) à lier entre eux les
filants et les cadres étant suspendue à cette superstructure
(III) grâce à un moyen de fixation mobile (12, 14-18) et en
ce que la superstructure (III) est fixée au bâti (9) au moyen
d'articulations (22) autorisant le repli de ladite superstructure (III) en position d'encombrement réduit.

2°) Appareil selon la reventdication 1, caractérisé
en ce que les articulations (22) sont constituées d'axes horizontaux de rotation (27) engagés dans des alésages alignés pratiqués dans des cornières (25,26) respectivement fixées à des
montants (23) du bâti (9) et à la superstructure (III).

3°) Appareil selon l'une des revendications 1 ou 2,
caractérisé en ce que la superstructure (III) comprend un châssis
tubulaire (19) formé par deux tubes (28) pliés en équerre placés
chacun à chacune des extrémités de ladite superstructure et liés
entre eux par deux tubes (29) parallèles.

4°) Appareil selon l'une quelconque des revendications
1 à 3, caractérisé en ce que le moyen mobile de fixation à la
superstructure de la machine (10) à lier les armatures comprend
un équilibreur (12) accroché à un chariot (15) coulissant dans
un rail longitudinal (14) lié à la superstructure par au moins
deux jeux de galets (18) coulissant sur deux glissières transversales (17) rigidement fixées à ladite superstructure (III), la machine (10) étant suspendue par câbles et/ou tiges (24) à l'équilibreur (12).

5°) Appareil selon l'une des revendications 3 ou 4, caractérisé en ce que les câbles et tuyaux d'alimentation en air, eau et électricité de la machine (10) sont passés à l'intérieur les éléments (23,28) à profil tubulaire constituant la superstructure (III), puis suspendus au rail (14) au moyen de chariots légers (16) de manière à assurer la protection mécanique des dites alimentations et à rendre l'appareil directement utilisable par simples branchements sur les réseaux d'air, d'eau et d'électricité.

6°) Appareil selon l'une quelconque des revendications 1 à 5, caractérisé en ce que la machine (10) à lier entre eux les filants et les cadres est une pince à souder.

7°) Appareil selon l'une quelconque des revendications 1 à 6 ,caractérisé en ce que le bâti (9) est muni de broches (21) d'accrochage et de stockage d'éléments (6) constituant les armatures.

8°) Appareil selon l'une quelconque des revendications 1 à 7, caractérisé en ce qu'il est pourvu de systèmes de verrouillage (36,37,38) en position de travail de la superstructure (III) articulée.

9°) Appareil selon l'une quelconque des revendications 1 à 8, caractérisé en ce que l'extrémité libre rabattue de la superstructure (III) repliée est rigidement fixée au bâti (9) par au moins un élément de liaison rigide(31) de manière à permettre la tenue de l'appareil pour des opérations de déplacement.

# FIG.1

0142434

FIG.2

3/3

FIG.3

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 299 208 (GENERAL SPRING CORP.) * Page 1, colonne de gauche, lignes 1-19; page 2, colonne de droite, lignes 39-56; figure 1 * | 1,4,6 | B 21 F 27/20 B 23 K 11/32 B 23 K 11/36 |
| A | FR-A-1 476 016 (CAPRIOGLIO) * Page 1, colonne de droite, ligne 1 - page 2, colonne de gauche, ligne 26; figures 1-3,8,9 * | 1,6 | |
| A | US-A-2 176 979 (PLATZ) * Page 2, colonne de droite, lignes 25-62; figure 1 * | 1,4,6 | |
| A | WO-A-8 300 647 (BEVERIDGE) * Revendications; figures * | 1,7 | **DOMAINES TECHNIQUES RECHERCHES (Int. Cl.4)** |
| A | FR-A-1 193 844 (VOIGT & HAEFFNER) * Figure 1 * | 1 | B 21 F B 23 K |
| A | US-A-4 319 112 (CONNOLLY) * Figures 1,2 * | 1 | |
| D,A | FR-A-2 155 083 (S.A. ARMATURES MANCELLES) | | |

---

| Le présent rapport de recherche a été établi pour toutes les revendications | | |
|---|---|---|
| Lieu de la recherche LA HAYE | Date d'achèvement de la recherche 19-12-1984 | THE K.H. Examinateur |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82